# EUROPÄISCHE PATENTANMELDUNG

(11) **EP 1 357 715 A2**
(43) Veröffentlichungstag der Anmeldung: **29.10.2003**
(21) Anmeldenummer: 03009279.5
(22) Anmeldetag: 24.04.2003
(51) Int. Cl.: H04L 25/02

(54) **Bustreiber für bidirektionale Zweidrahtbussysteme**

(30) Priorität: 24.04.2002 DE 10219056
(71) Anmelder: Demag Cranes & Components GmbH, 58300 Wetter (DE)
(72) Erfinder: Behnke, Klaus, 44143 Dortmund (DE); Hülsmann, Michael, 58313 Herdecke (DE)
(74) Vertreter: Moser, Jörg Michael, Dipl.-Ing.

(57) **Zusammenfassung**

Die Erfindung betrifft einen Bustreiber (1) für bidirektionale Zweidrahtbussysteme, insbesondere in Schleifleitungsausführung für Krananlagen, wobei der Bustreiber (1) zwischen einem ersten (2a) Zweidrahtbus und einem zweiten Zweidrahtbus (2b), insbesondere einen CAN-Bus (2a) und einem Hochpegelbus (2b), geschaltet ist und wobei den beiden Betriebsrichtungen jeweils ein Empfänger (5a, 5b) zum Empfang und ein Sender (4a, 4b) zum Senden eines jeweils in einer Betriebsrichtung weiterzuleitenden Signals zugeordnet sind, wobei an den ersten Zweidrahtbus (2a) ein erster und an den zweiten Zweidrahtbus (2b) ein zweiter aus je einem Sender (4a, 4b) und je einem Empfänger (5a, 5b) gebildeter Transceiver (3a, 3b) angeschlossen ist und der Senderausgang und der Empfängereingang jedes Transceivers (3a, 3b) parallel am zugeordneten Zweidrahtbus (2a, 2b) angeschlossen und die beiden Transceiver (3a, 3b) selbst elektrisch miteinander verbunden sind, wobei eine Schalteinrichtung (6) mit mindestens einer Richtungserkennung (7, 11) und einer Richtungslogik (8) vorgesehen ist, welche die Betriebsrichtung des weiterzuleitenden Signals selbsttätig erkennt und welche das Weiterleiten eines Signals in der jeweils anderen Betriebsrichtung verhindert.

Um einen mit geringem Aufwand herstellbaren und störungsfreien Bustreiber für bidirektionale Zweidrahtbussysteme, insbesondere für die Kopplung eines CAN-Bus-Systems mit einem Hochpegelbussystem, zu schaffen, wird vorgeschlagen, dass die Richtungserkennung (7) zwei in den zweiten Zweidrahtbus (2a, 2b) geschaltete Dioden (10a, 10b) umfasst, wobei eine Diode (10a) in der ersten Leitung (9a) und die andere Diode (10b) in der zweiten Leitung (9) dieses Zweidrahtbusses (2b) geschaltet ist und wobei beide Dioden (10a, 10b) bezüglich ihrer Durchlassrichtungen entgegengesetzt zueinander geschaltet sind und dass die Richtungserkennung (7) anhand der Spannungen vor und hinter den Dioden (10a, 10b) die Erkennung der Betriebsrichtung des weiterzuleitenden Signals erfolgt.

## Beschreibung

Die Erfindung betrifft einen Bustreiber für bidirektionale Zweidrahtbussysteme, insbesondere in Schleifleitungsausführung für Krananlagen, wobei der Bustreiber zwischen einem ersten Zweidrahtbus und einem zweiten Zweidrahtbus, insbesondere einen CAN-Bus und einem Hochpegelbus, geschaltet ist und wobei den beiden Betriebsrichtungen jeweils ein Empfänger zum Empfang und ein Sender zum Senden eines jeweils in einer Betriebsrichtung weiterzuleitenden Signals zugeordnet sind, wobei an den ersten Zweidrahtbus ein erster und an den zweiten Zweidrahtbus ein zweiter aus je einem Sender und je einem Empfänger gebildeter Transceiver angeschlossen ist und der Senderausgang und der Empfängereingang jedes Transceivers parallel am zugeordneten Zweidrahtbus angeschlossen und die beiden Transceiver selbst elektrisch miteinander verbunden sind, wobei eine Schalteinrichtung mit mindestens einer Richtungserkennung und einer Richtungslogik vorgesehen ist, welche die Betriebsrichtung des weiterzuleitenden Signals selbsttätig erkennt und welche das Weiterleiten eines Signals in der jeweils anderen Betriebsrichtung verhindert.

Bustreiber für bidirektionale Zweidrahtbussysteme wie beispielsweise CAN-Bussysteme oder Hochpegelbussysteme sind bekannt. Bei diesen Bussystemen werden die Informationen in beiden Richtungen über dieselben Signalleitungen übertragen, beispielsweise in Form von Differenzsignalen. Der aktive Buszustand wird bei CAN-Bussystemen durch die Ausgabe eines Differenzsignals und der passive Buszustand durch Deaktivieren der Sender realisiert.

Bei Zwischenschaltung eines Bustreibers in einen Zweidrahtbus als Verstärker werden zwei elektrisch miteinander verbundene Transceiver verwendet, die jeweils einen Sender und einen Empfänger aufweisen. Sender und Empfänger jedes Transceivers sind parallel geschaltet und mit dem zugehörigen Zweidrahtbus verbunden. Zur Übertragung eines Signals von dem einen Zweidrahtbussystem zu dem anderen wird dieses zunächst von dem Empfänger des einen Transceivers empfangen und dann zur Weiterleitung von dem Sender des anderen Transceivers verstärkt wieder in den Zweidrahtbus gegeben.

Wäre die Signalübertragung in beide Richtungen aktiv, würde eine Mitkopplung entstehen. Der Zustand des ersten Zweidrahtbussystems würde über dessen Empfänger und den Sender des zweiten Zweidrahtbussystems auf das zweite Zweidrahtbussystem übertragen, gleichzeitig aber von dessen Empfänger und dem Sender des ersten Zweidrahtbussystems auf das erste Zweidrahtbussystem zurückgeführt.

Um diese Mitkopplungen zu vermeiden ist beispielsweise aus der deutschen Patentschrift DE 42 32 922 C2 bekannt, ein Modulationsverfahren zu verwenden, was allerdings die nutzbare Übertragungsrate reduziert. Eine weitere bekannte Lösung führt den Transceivern zusätzlich die Betriebsrichtung zu, in der ein weiterzuleitendes Signal zu übertragen ist. Ebenfalls bekannt ist es, für beide Richtungen entsprechende Differenzsignale zu verwenden.

Des Weiteren ist aus der deutschen Patentanmeldung DE 198 33 693 A1 eine Schnittstelle für einen bidirektionalen I²C-Bus bekannt, die an einem medizinischen Gerät angeordnet ist. In der dort beschriebenen Anwendung werden über den I²C-Bus zwei entfernt voneinander angeordnete medizinische Geräte miteinander verbunden. Der I²C-Bus weist in bekannter Weise eine Datenleitung und eine Taktleitung auf. Jeder dieser Leitungen ist innerhalb der Schnittstelle ein eigener Bustreiber mit einem differentiellen Sender- und Empfängerbaustein zugeordnet. Der Empfängerbaustein ist so geschaltet, dass dieser die von dem entfernten Gerät ankommenden Signale immer mithört. Dem Bustreiber ist eine Logikschaltung zugeordnet, die dafür sorgt, dass der Sender nur aktiviert wird, wenn vom eigenen Gerät eine "0" gesendet wird. Der genaue Aufbau der Logikschaltung ist nicht offenbart.

Die Aufgabe der Erfindung ist es, einen mit geringem Aufwand herstellbaren und störungsfreien Bustreiber für bidirektionale Zweidrahtbussysteme, insbesondere für die Kopplung eines CAN-Bus-Systems mit einem Hochpegelbussystem, zu schaffen.

Die Lösung dieser Aufgabe ist durch die im Anspruch 1 angegebenen Merkmale gegeben. Durch die kennzeichnenden Merkmale der Unteransprüche ist der Bustreiber in vorteilhafter Weise weiter ausgestaltet.

Die Lösung sieht für beide Signalrichtungen eine Schalteinrichtung mit einer Richtungserkennung vor, welche die Betriebsrichtung des weiterzuleitenden Signals selbsttätig aus den Pegeln der beiden Bussysteme erkennt und welche das Weiterleiten eines Signals in der jeweils anderen Richtung verhindert.

In einer einfachen Ausführung umfasst die Richtungserkennung zwei in einem der beiden Zweidrahtbusse geschaltete Dioden mit einer Durchlassrichtung und einer Sperrrichtung, wobei eine Diode in eine der beiden Leitungen und die andere Diode in die andere Leitung dieses Zweidrahtbusses geschaltet ist und wobei beide Dioden bezüglich ihrer Durchlassrichtungen entgegengesetzt zueinander geschaltet sind, so dass anhand der Spannungen vor und hinter den Dioden die Erkennung der Betriebsrichtung des weiterzuleitenden Signals erfolgt.

Eine weitere Vereinfachung des Bustreibers ergibt sich, wenn die Richtungserkennung die Aktivität des Senders erkennt, der den beiden Diodeneinheiten zugewandt ist und bei vorliegender Aktivität die andere Betriebsrichtung während der Aktivität sperrt.

In vorteilhafter Ausgestaltung wird der Bustreiber als Kopplungselement eingesetzt, der einen ersten Zweidrahtbus, der als CAN-Bus ausgebildet ist, mit einem zweiten Zweidrahtbus, der als Hochpegelbus ausgebildet ist, verbindet. Somit können beispielsweise zwei voneinander räumlich getrennte CAN-Bussysteme über jeweils einen erfindungsgemäßen Bustreiber mit einem Hochpegelbus verbunden werden, über den sicher Strecken in einem Umfeld mit starken Störeinflüssen und/oder große Strecken überbrückt werden können.

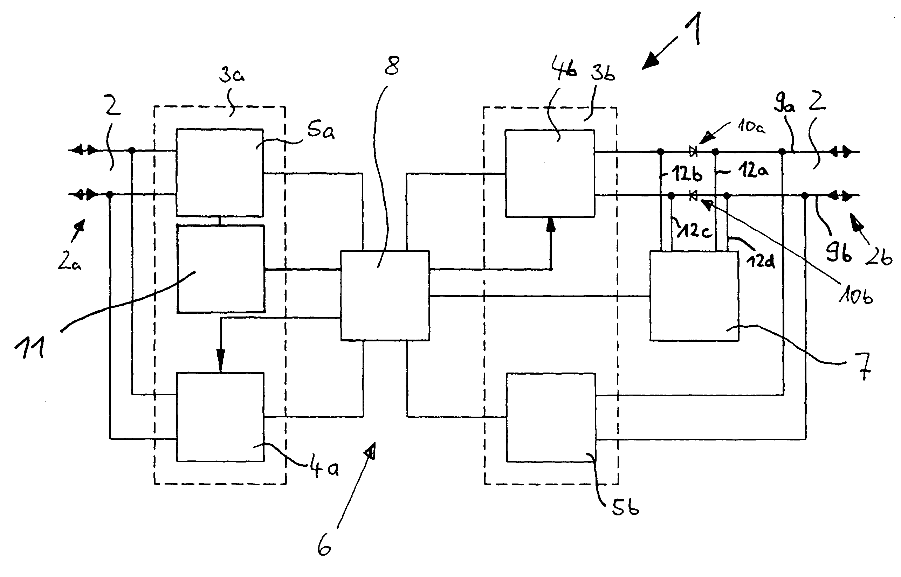

Ein Ausführungsbeispiel der Erfindung ist in der einzigen Figur der Zeichnung dargestellt und wird nachfolgend näher beschrieben.

Die Figur zeigt einen Bustreiber 1, der als Zwischenverstärker in einen Zweidrahtbus 2 geschaltet ist. Der Zweidrahtbus 2 gehört zu einem bidirektionalen Zweidrahtbussystem, bei dem Signale in beide Betriebsrichtungen übertragen werden können. Der in der Figur dargestellte Bustreiber 1 verbindet einen ersten Zweidrahtbus 2, der als CAN-Bus 2a ausgebildet ist, mit einem zweiten Zweidrahtbus 2, der als bidirektionaler Hochpegel-Bus 2b ausgebildet ist. Der Bustreiber 1 übernimmt hier eine Kopplungsfunktion. Also kann der Bustreiber 1 nicht nur in einem Zweidrahtbus 2 zwischengeschaltet werden, sondern auch verschiedene Zweidrahtbusse 2a, 2b miteinander verbinden.

Der Bustreiber 1 besteht aus zwei Transceivern 3a, 3b, die wiederum jeweils einen Sender 4a, 4b und einen Empfänger 5a, 5b aufweisen. Der Sender 4a, 4b und der Empfänger 5a, 5b jedes Transceivers 3a, 3b sind jeweils mit dem zugehörigen Zweidrahtbus 2 verbunden, jeweils der Empfängereingang 5a und der Senderausgang 4a mit dem zugehörigen CAN-Bus 2a sowie der Empfängereingang 5b und der Senderausgang 4b mit dem zugehörigen Hochpegel-Bus 2b. Der Senderausgang und der Empfängereingang jedes Transceivers 3a, 3b sind wie in der Figur gezeigt parallel geschaltet. Die beiden Transceiver 3a, 3b sind ebenfalls elektrisch miteinander verbunden.

Zur Weiterleitung des Signals vom CAN-Bus 2a zum Hochpegelbussystem 2b ist der Empfänger 5a des Transceivers 3a mit dem Sender 4b des Transceivers 3b verbunden. Zur Weiterleitung des Signals in die andere Richtung ist der Empfänger 5b des Transceivers 3b mit dem Sender 4a des Transceivers 3a verbunden. Weiter verfügt der Bustreiber 1 über eine Schalteinrichtung 6 mit einer Richtungserkennung 11 auf Seiten des CAN-Bus 2a, mit einer Richtungserkennung 7 auf Seiten des Hochpegelbus 2b und einer Richtungslogik 8. Der Hochpegelbus 2b weist zwei Leitungen 9a und 9b auf, die wie zuvor beschrieben eingangs- beziehungsweise ausgangsseitig mit dem Sender 4b und dem Empfänger 5b verbunden sind.

In die Leitungen 9a, 9b des Hochpegelbus 2b, die zu dem Sender 4b führen, ist jeweils nach der Abzweigung zu dem Empfänger 5b eine Diode 10a, 10b, die in üblicher Weise eine Durchlassrichtung und eine Sperrrichtung aufweisen, eingesetzt. Die Figur lässt erkennen, dass die beiden Dioden 10a, 10b bezüglich ihrer Durchlassrichtung entgegengesetzt zueinander geschaltet sind. Die Dioden 10a, 10b sind mit ihren Durchlass- und Sperrrichtungen so in die Leitungen 9a, 9b eingesetzt, dass bei Weiterleitung des Signals für aktiven Buszustand vom CAN-Bus 2a an den Hochpegelbus 2b die Differenzsignale des Senders 4b auf die Leitungen 9a, 9b des Hochpegelbus 2b gelangen. Wird hingegen ein entsprechendes Differenzsignal bei umgekehrter Signalrichtung von außen über die Leitungen 9a, 9b des Hochpegelbus 2b zugeführt, so befinden sich die Dioden 10a, 10b in Sperrrichtung. Das Differenzsignal kann in diesem Fall die Dioden 10a, 10b nicht überwinden. Durch einen Vergleich der Spannungen vor und hinter den Dioden 10 und 10b in den Leitungen 9a und 9b erkennt die Richtungserkennung 7, ob der Sender 4b oder ein anderer Sender auf dem Hochpegelbussystem 2b aktiv ist oder nicht.

Für einen Vergleich der Spannungen vor und hinter den Dioden 10a, 10b in den Leitungen 9a und 9b sind entsprechende Leitungen 12a, 12b, 12c und 12d zwischen der Richtungserkennung 7 und den Leitungen 9a und 9b vorgesehen. Die Leitung 12a ist mit der Leitung 9a vor der Diode 10a (in Richtung des Senders 4b gesehen) verbunden, die Leitung 12b hinter dieser Diode 10a. Entsprechend greift die Leitung 12d die Leitung 9b vor der Diode 10b und die Leitung 12c hinter der Diode 10b ab.

Die beiden Dioden 10a, 10b können selbstverständlich auch anders als durch einfache Dioden 10a, 10b ausgebildet werden. Außerdem können die beiden Dioden 10a, 10b selbstverständlich auch im CAN-Bus 2a angeordnet sein.

Die Signale der Richtungserkennung 11 am CAN-Bus 2a und der Richtungserkennung 7 am Hochpegelbus 2b werden der Richtungslogik 8 zugeführt. Diese sperrt bei Signalübertragung vom CAN-Bus 12 zum Hochpegelbus 2 den Sender 4a des CAN-Bus 12. Bei Signalübertragung vom Hochpegelbus 2b zum CAN-Bus 12 wird der Sender 4b des Hochpegelbus 2b gesperrt.

Mitkopplungseffekte werden auf diese Weise wirksam verhindert. Die Richtungssperrung kann vorzugsweise mittels einer Richtungslogik 8 erfolgen, die in der Schalteinrichtung 6 vorgesehen ist.

### Bezugszeichenliste

- 1: Bustreiber
- 2: Zweidrahtbus
- 2a: CAN-Bus
- 2b: Hochpegelbus
- 3a, 3b: Transceiver
- 4a, 4b: Sender
- 5a, 5b: Empfänger
- 6: Schalteinrichtung
- 7: Richtungserkennung
- 8: Richtungslogik
- 9a, 9b: Leitung
- 10a, 10b: Dioden
- 11: Richtungserkennung
- 12a, 12b, 12b, 12d: Leitung

## Patentansprüche

1. Bustreiber (1) für bidirektionale Zweidrahtbussysteme, insbesondere in Schleifleitungsausführung für Krananlagen, wobei der Bustreiber (1) zwischen einem ersten (2a) Zweidrahtbus und einem zweiten Zweidrahtbus (2b), insbesondere einen CAN-Bus (2a) und einem Hochpegelbus (2b), geschaltet ist und wobei den beiden Betriebsrichtungen jeweils ein Empfänger (5a, 5b) zum Empfang und ein Sender (4a, 4b) zum Senden eines jeweils in einer Betriebsrichtung weiterzuleitenden Signals zugeordnet sind, wobei an den ersten Zweidrahtbus (2a) ein erster und an den zweiten Zweidrahtbus (2b) ein zweiter aus je einem Sender (4a, 4b) und je einem Empfänger (5a, 5b) gebildeter Transceiver (3a, 3b) angeschlossen ist und der Senderausgang und der Empfängereingang jedes Transceivers (3a, 3b) parallel am zugeordneten Zweidrahtbus (2a, 2b) angeschlossen und die beiden Transceiver (3a, 3b) selbst elektrisch miteinander verbunden sind, wobei eine Schalteinrichtung (6) mit mindestens einer Richtungserkennung (7, 11) und einer Richtungslogik (8) vorgesehen ist, welche die Betriebsrichtung des weiterzuleitenden Signals selbsttätig erkennt und welche das Weiterleiten eines Signals in der jeweils anderen Betriebsrichtung verhindert,
**dadurch gekennzeichnet,**
**dass** die Richtungserkennung (7) zwei in den zweiten Zweidrahtbus (2a, 2b) geschaltete Dioden (10a, 10b) umfasst, wobei eine Diode (10a) in der ersten Leitung (9a) und die andere Diode (10b) in der zweiten Leitung (9) dieses Zweidrahtbusses (2b) geschaltet ist und wobei beide Dioden (10a, 10b) bezüglich ihrer Durchlassrichtungen entgegengesetzt zueinander geschaltet sind und dass die Richtungserkennung (7) anhand der Spannungen vor und hinter den Dioden (10a, 10b) die Erkennung der Betriebsrichtung des weiterzuleitenden Signals erfolgt.

2. Bustreiber nach Anspruch 1,
**dadurch gekennzeichnet,**
**dass** die Richtungserkennung (7) die Aktivität des Senders (4b) erkennt, der den beiden Dioden (10a, 10b) zugewandt ist und bei vorliegender Aktivität die andere Betriebsrichtung während der Aktivität sperrt.

3. Bustreiber nach Anspruche 1 oder 2,
**dadurch gekennzeichnet,**
**dass** der Bustreiber (1) als Kopplungselement einen ersten Zweidrahtbus (2), der als CAN-Bus (2a) ausgebildet ist, mit einem zweiten Zweidrahtbus (2), der als Hochpegelbus (2a) ausgebildet ist, verbindet.
